# EUROPEAN PATENT APPLICATION

(11) **EP 1 643 025 A1**
(43) Date of publication of application: **05.04.2006**
(21) Application number: 04747448.1
(22) Date of filing: 07.07.2004
(51) Int. Cl.: D03D 9/00, D03D 15/00, B60C 9/04, D02G 3/22, B60C 9/00

(54) **SYNTHETIC FIBER TIRE CORD FABRIC FOR REINFORCING RUBBER AND PNEUMATIC TIRE USING THE SAME**

(30) Priority: 08.07.2003 JP 2003271780
(71) Applicant: Teijin Techno Products Limited, Osaka-shi, Osaka 541-0054 (JP)
(72) Inventor: OBORA, Kenji, Teijin Techno Products Limited, Ibaraki-shi, Osaka 5670006 (JP); FURUKAWA, Masashi, Teijin Techno Products Limited, Ibaraki-shi, Osaka 5670006 (JP)
(74) Representative: Hallybone, Huw George
(86) International application number: PCT/JP2004/009982
(87) International publication number: WO 2005/003416

(57) **Abstract**

A tire fabric woven of warps comprising synthetic yarns subjected to first twisting and final twisting and wefts comprising synthetic yarns, wherein said wefts have a breaking elongation of 70 to 180 % and a strength of not more than 2.0 N at the primary yield point, and have loops and sagging.

## Description

### Technical Field

The present invention relates to a synthetic fiber tire fabric for reinforcing rubber and to a pneumatic tire using the same, in more detail, to a synthetic fiber tire fabric for reinforcing rubber, playing an excellent effect on the improvement in the uniformity of the pneumatic tire and to a pneumatic tire using the same.

### Background Art

Polyamide fibers, polyester fibers, polyvinyl alcohol fibers or wholly aromatic polyamide fibers have characteristics comprising high strengths and high elasticity and further have excellent dimensional stability, and have therefore widely been used as reinforcing materials for various industrial articles, especially reinforcing fibers for rubber articles such as tires, belts and hoses.

Therein, the above-described reinforcing fibers, for example, polyester fibers, have been used for rubber-reinforcing uses such as tires, belts and hoses in the form of the so-called tire fabric which is obtained by applying first twisting and final twisting to multifilament yarns having a fineness of 1,670 dtex or 1,100 dtex to obtain the twisted cords, warping and arranging 1,000 to 1,500 twisted cords as warps, and then weaving wefts comprising cotton spun yarns, rayon spun yarns, synthetic fiber yarns or the like into the arranged warps to obtain the woven fabric having a weft density of 3 to 5 wefts / 5 cm, as shown in JP-A 2000-328387 (hereinafter, JP-A means "Japanese Unexamined Patent Publication") or in JP-A 2000-103204.

The above-described tire fabric is subjected to an adhesive-imparting process and a drying and thermal treating process, and then embedded in various kinds of rubber. When the tire fabric is especially used for reinforcing a pneumatic tire, it is needed to arrange the cords as the warps at a constant distance to stabilize the shape of the molded tire, namely to improve the uniformity of the tire.

However, when such a tire fabric as a conventional tire fabric has been used, there has been a problem that the density of the warps of the tire fabric is liable to become non-uniform due to the initial tensile resistance of wefts on the molding of a tire in an annular shape, thereby deteriorating the uniformity of the tire.

### Disclosure of Invention

The object of the present invention is to provide a synthetic fiber tire fabric which solves the problem of the above-described conventional technique, can uniformly stretch wefts with the increase of spaces between warps, when a pneumatic tire is molded in an annular shape in a tire-molding process, and plays an excellent effect on the improvement in the uniformity of the pneumatic tire, and to provide a pneumatic tire using the same.

Namely, according to the present invention, provided is a synthetic fiber tire fabric woven of warps comprising synthetic fibers subjected to first twisting and final twisting and wefts comprising synthetic fibers and used for reinforcing rubber, characterized in that said wefts have a breaking elongation of 70 to 180 % and a strength of not more than 2.0 N at the primary yield point, and have loops and sagging.

Furthermore, according to the present invention, provided is a pneumatic tire characterized in that the above-described synthetic fiber tire fabric is used as a reinforcing material.

### Best Mode for Carrying Out the Invention

The synthetic fibers used in the present invention are fibers obtained by spinning and drawing a polymer comprising a polyamide represented by nylon 6 or nylon 66, a polyester represented by polyethylene terephthalate or polybutylene terephthalate, or polyvinyl alcohol by conventional methods.

In order to enhance the strength of the above-described synthetic fibers, it is desirable that the polymer having a high viscosity is drawn in a high draw ratio.

And, the tire fabric of the present invention can be obtained by applying first twisting and final twisting to the above-described synthetic fibers, arranging 1,000 to 1,500 formed yarns as warps, and then weaving wefts into the arranged warps not to scatter the warps. It is preferable that the width and length of said tire fabric are 140 to 160 cm and 800 to 2,500 m, respectively, and it is also preferable that the wefts are woven at a distance of 2.0 to 5.0 wefts/5 cm.

In the present invention, it is important that the wefts of the above-described tire fabric have loops and sagging, and have a breaking elongation of 70 to 180 % and a strength of not more than 2.0 N at the primary yield point.

Thus, since the wefts constituting the tire fabric have the breaking elongation of 70 to 180 %, the wefts can sufficiently be stretched, when a tire is molded in an annular shape in a tire-molding process. And, since the strength at the primary yield point is not more than 2.0 N, the wefts can easily be stretched, even when a non-uniform force is added. Therefore, the uniformity of the tire can be improved.

A method for obtaining the above-described weft having the loops and the sagging and having a breaking elongation of 70 to 180% and a strength of not more than 2.0 N at the primary yield point is not limited, and a conventional known method can arbitrarily be adopted. For example, the weft can be obtained by suitably adjusting a difference between overfeed rates, a difference between yarn finenesses, or the like, when two polyester intermediate oriented yarns or half-drawn yarns are fed into an air interlacing nozzle and interlaced. Concretely, the interlacement may be carried out, for example, with an air interlacing nozzle called "Taslan" under conditions comprising a supplied compressed air pressure of 1 to 15 g / cm² and an overfeed rate of 1 to 50 %.

To the above-described fabric, adhesives are imparted. The adhesives to be adhered include adhesives containing epoxy compounds, isocyanate compounds, halogenated phenolic compounds, resorcinol polysulfide compounds, or the like. Concretely, exemplified preferably is a method comprising imparting a mixture liquid of an epoxy compound, a blocked isocyanate and a latex as the first treating liquid to the fabric, thermally treating the treated fabric, imparting a liquid (RFL liquid) comprising a resorcinol formaldehyde precondensate and a rubber latex as the second treating liquid to the fabric, and further thermally treating the fabric.

The dry heating conditions of the adhesive-imparted fabric are at 170 to 215°C for 30 to 90 seconds, preferably at 190 to 210°C for 50 to 70 seconds, in the case of nylon 6 fibers, and at 200 to 240°C for 30 to 90 seconds, preferably at 210 to 230°C for 50 to 70 seconds, in the case of nylon 66. Further, in the case of a polyester, the fabric is treated at 200 to 250°C for 30 to 150 seconds, preferably at 210 to 230°C. In any case, a drawing of about 3 % is applied to the fabric.

### Examples

Hereinafter, the constitution and effects of the present invention will be explained with Examples in more detail. Therein, physical properties in Examples were determined by the following methods.
(1) The breaking elongation of the weft and the strength of the weft at the primary yield point
   The physical properties of the wefts of the tire fabric after the adhesive treatment were measured according to JIS L 1013 7.10.
(2) The uniformity of a tire
   The RFV (lateral force variation) of a sample tire was measured under conditions of a rim (16 × 6.5 JJ), an inner pressure (200 kPa) and a load (5.50 kN) according to JASOC 607 (method for testing the uniformity of a tire for an automobile). It can be said that the uniformity is increasingly excellent, as the value is reduced.

### [Example 1]

Two multifilament yarns each having 1670 dtex / 250 filaments and obtained by melt-spinning polyethylene terephphalate having an intrinsic viscosity of 0.95 by a conventional method and then drawing the obtained filaments by a conventional method at a draw ratio of 5.5 were twisted with the number of twists comprising first twists of 40 twists / 10 cm and final twists of 40 twists / 10 cm to obtain the cord.

In addition, two multifilament yarns each having 135 dtex / 72 filaments and obtained by melt-spinning polyethylene terephthalate having an intrinsic viscosity of 0.95 by a conventional method and then taking off the spun filaments at a winding speed of 3,000 m/minute were fed into an air interlacing nozzle at overfeed rates of 1 % and 10 %, respectively, and then blowing compressed air having a pressure of 5.0 kg / cm² to interlace the yarns with each other, thus obtaining the weft having the loops and the sagging.

1500 cords described above were paralleled to each other to form the warps, and the above-described wefts were woven into the warps at a distance of 2 wefts / 5 cm to obtain the woven fabric.

Subsequently, the above-described tire fabric was dipped in a mixture liquid (the first bath treating liquid) comprising an epoxy compound, a blocked isocyanate compound and a rubber latex, dried at 130°C for 100 seconds, and then drawn and thermally treated at 240°C for 45 seconds.

Further, the tire fabric treated in the first treating bath was dipped in the second treating liquid comprising a resorcinol-formalin-rubber latex (RFL), dried at 100°C for 100 seconds, drawn and thermally treated at 240°C for 60 seconds, and then subjected to a relax thermal treatment to produce the synthetic fiber tire fabric for reinforcing rubber. This tire fabric was used as a reinforcing material to produce a pneumatic tire (tire size 225 / 60R16) by a conventional method.

The breaking elongation of the weft and the strength of the weft at the primary yield point in the obtained tire fabric, and the uniformity of the tire were measured, and are shown in Table 1.

### [Comparative Example 1]

A tire fabric and a pneumatic tire were similarly produced as in Example 1 except that a polyester multifilament yarn of 235 dtex / 48 filaments was used as each polyester multifilament yarn fed into the air interlacing nozzle at an overfeed rate of 1% in Example 1.

The breaking elongation of the weft and the strength of the weft at the primary yield point in the obtained tire fabric, and the uniformity of the tire were measured, and are shown in Table 1.

### [Comparative Example 2]

A tire fabric and a pneumatic tire were similarly produced as in Example 1 except that a polyester multifilament yarn of 90 dtex / 72 filaments was used as each polyester multifilament yarn fed into the air interlacing nozzle at an overfeed rate of 1% in Example 1.

The breaking elongation of the weft and the strength of the weft at the primary yield point in the obtained tire fabric, and the uniformity of the tire were measured, and are shown in Table 1.

**Table 1**

| | | Example 1 | Comparative Example 1 | Comparative Example 2 |
|---|---|---|---|---|
| Breaking elongation | % | 80 | 71 | 65 |
| Strength at primary yield point | N | 1.6 | 2.2 | 1.3 |
| Uniformity (RFV) | N | 45 | 50 | 52 |

### Industrial applicability

According to the present invention, obtained is the synthetic tire fabric which is used for reinforcing the rubber and whose wefts can uniformly be stretched with the increase of spaces between the warps, when a pneumatic tire is molded in an annular shape in a tire-molding process. Therefore, the pneumatic tire having the improved uniformity is obtained, when said tire fabric is used for reinforcing the tire.

## Claims

1. A synthetic fiber tire fabric woven of warps comprising synthetic fibers subjected to first twisting and final twisting and wefts comprising synthetic fibers and used for reinforcing rubber, **characterized in that** said wefts have a breaking elongation of 70 to 180 % and a strength of not more than 2.0 N at the primary yield point, and have loops and sagging.

2. The synthetic fiber tire fabric for reinforcing the rubber, according to Claim 1, wherein the synthetic fibers are polyamide fibers, polyester fibers or polyvinyl alcohol fibers.

3. The synthetic fiber tire fabric for reinforcing the rubber, according to Claim 1, wherein the wefts are fluid jet processed yarns comprising core fibers and sheath fibers.

4. A pneumatic tire using a synthetic fiber tire fabric as a reinforcing material, **characterized in that** said synthetic fiber tire fabric is the synthetic fiber tire fabric for reinforcing the rubber, according to one of Claim 1 to Claim 3.
